# EUROPEAN PATENT SPECIFICATION

(11) **EP 3 386 750 B1**
(45) Date of publication and mention of the grant of the patent: **11.11.2020**
(21) Application number: 16798505.0
(22) Date of filing: 21.11.2016
(51) Int. Cl.: B32B 27/08, B32B 27/32

(54) **MULTI-LAYER FILM**
MEHRSCHICHTIGE FOLIE
FILM MULTICOUCHE

(30) Priority: 09.12.2015 EP 15198660
(43) Date of publication of application: 17.10.2018
(73) Proprietor: SABIC Global Technologies B.V., 4612 PX Bergen op Zoom (NL)
(72) Inventor: SOLIMAN, Maria, 6160 GA Geleen (NL); VAN DEN ESSCHERT, Bart, 6160 GA Geleen (NL)
(74) Representative: Sabic Intellectual Property Group
(86) International application number: PCT/EP2016/078311
(87) International publication number: WO 2017/097573

(56) References cited:
- EP-A1- 2 344 332
- WO-A1-2015/157876
- WO-A1-2015/179291
- US-A1- 2011 252 745
- US-A1- 2012 100 356
- US-A1- 2012 238 720
- US-A1- 2014 072 787
- Dr J Lamonte Adams ET AL: "Polyethylene Product Capabilities From Metallocene Catalysts with the UNIPOL Process", , 31 December 1997 (1997-12-31), XP055335560, Retrieved from the Internet: URL:http://www.univation.com/downloads/whi tepapers/polyethylene.pdf [retrieved on 2017-01-16]

## Description

The invention relates to a multi-layer film, an article prepared from said film, the use of said film for packaging and to a process for the preparation of said film.

During the last years many packaging film converters have chosen to change from monolayer to multi-layer films, with a trend to a higher amount of layers in a film. A major reason for this trend is that companies as well as consumers pay more and more attention to environmental and sustainability aspects of packaging (see e.g. Challenges to Packaging in a global world, Gunilla Jonson, Marcus Wallenberg Prize symposium, September 30, 2005 and Marsh, Food Packaging, Journal of Food Science, Vol. 72, 3, 2007, pages 39-55).

When using multi-layer films, it is possible to use films having a lower film thickness while retaining the desired properties for the packaging material. Since less material is needed for these multi-layer films, sustainability of the packaging material prepared from said films is improved.

For packaging, especially hot tack and heat sealing properties of the films are very important properties, since the two most used techniques to join films into packaging are hot tack and heat: sealing.

US2012/100356A1 discloses a multilayer blown film comprising skin layers independently comprising a low-MIR mPE; a sub-layer comprising high-MIR mPE and comprising a pair of intermediate layers on opposite sides of a core sub-layer, the intermediate layers comprising HDPE, LDPE or a combination thereof; and the core sub-layer comprising LDPE.

Therefore, it is the object of the invention to provide multi-layer films having improved heat sealing and hot tack properties.

This object is achieved by a multilayer 5-layer film consisting of a first layer consisting of linear low density polyethylene; a second layer and a fourth layer both consisting of high density polyethylene; a third layer consisting of low density polyethylene; a fifth layer consisting of linear low density polyethylene; wherein first and fifth layers are the outer layers, second and fourth layers are intermediate layers, and third layer is the core layer, and wherein both outer layers comprise linear low density polyethylene substantially free of long chain branching and having a density above 915 kg/m³.

Consisting essentially of, in the sense of the present invention, may preferably mean that it does not comprise more than 7 wt % of other components/compounds.

With outer layers are meant the layers that are located on the outside of the film. The outer layers are thus adjacent to only one other layer of the multi-layer film according to the invention on only one of their sides. As compared to other layers in the multi-layer film of the invention, the outer layers have a substantially larger portion of the layer that faces the outside. With core layer is meant a layer that is located in the middle of the multi-layer arrangement of the multi-layer film according to the invention. With intermediate layer is meant a layer that is located between one outer layer and one core layer. An intermediate layer is thereby adjacent to one outer layer and the core layer.

In the multi-layer film of the invention, the outer layers both consist of linear low density polyethylene. The outer layers may especially comprise the same linear low density polyethylene.

The amount of linear low density polyethylene in both of the outer layers is therefore 100% by weight based on the total weight of the respective layer.

Preferably, the outer layers comprise the same linear low density polyethylene. However, it is also possible that outer layers comprise a different linear low density polyethylene.

At least one or both outer layer(s) may further comprise additives, for example additives as described herein.

In a multi-layer film according to the invention, the core layer consists of low density polyethylene.

In a multi-layer film according to the both intermediate layers consist of high density polyethylene.

The production processes of LDPE, HDPE and LLDPE are summarised in Handbook of Polyethylene by Andrew Peacock (2000; Dekker; ISBN 0824795466) at pages 43-66. The catalysts can be divided in three different subclasses including Ziegler Natta catalysts, Phillips catalysts and single site catalysts. The latter class is a family of different classes of compounds, metallocene catalysts being one of them. As elucidated at pages 53-54 of said Handbook a Ziegler-Natta catalysed polymer is obtained via the interaction of an organometallic compound or hydride of a Group I-III metal with a derivative of a Group IV-VIII transition metal. An example of a (modified) Ziegler-Natta catalyst is a catalyst based on titanium tetra chloride and the organometallic compound triethylaluminium. A difference between metallocene catalysts and Ziegler Natta catalysts is the distribution of active sites. Ziegler Natta catalysts are heterogeneous and have many active sites. Consequently polymers produced with these different catalysts will be different regarding for example the molecular weight distribution and the comonomer distribution.

With linear low density polyethylene as used herein is meant a low density polyethylene copolymer comprising ethylene and a C3- C10 alpha-olefin co monomer (ethylene-alpha olefin copolymer). Suitable alpha-olefin co monomers include 1-butene, 1-hexene, 4-methyl pentene and 1-octene. The preferred co monomer is 1-hexene. Preferably, the alpha-olefin co monomer may be present for example in an amount of about 1 to about 25 5 to about 20 percent by weight of the ethylene-alpha olefin copolymer, preferably of 5 to about 20 percent by weight of the ethylene-alpha olefin copolymer, more preferably an amount of from about 7 to about 15 percent by weight of the ethylene-alpha olefin copolymer.

The linear low density polyethylene (LLDPE) has a density above 915 kg/m³, more preferably, the density of the linear low density polyethylene is from 916 to 934 kg/m³. Most preferably, the density of the linear low density polyethylene if from 917 to 920 kg/m³.

For purpose of the invention, the density of the linear low density polyethylene, the low density polyethylene and the high density polyethylene is determined using ISO1872-2.

Preferably, the melt flow index of the linear low density polyethylene ranges from 0.1 to 4 g/10min, for example from 0.3 to 3 g/10min, for example from 0.2 to 2 g/10min, for example from 0.5 to 1.5 g/10min. For purpose of the invention, the melt flow index is determined herein using ISO1133:2011 (190°C/2.16kg).

The technologies suitable for the LLDPE manufacture include but are not limited to gas-phase fluidized-bed polymerization, polymerization in solution, and slurry polymerization. According to a preferred embodiment of the present invention the LLDPE has been obtained by gas phase polymerization in the presence of a Ziegler-Natta catalyst. According to another preferred embodiment, the LLDPE may be obtained by gas phase polymerization in the presence of a metallocene catalyst. The linear low density polyethylene comprised in at least one or both outer layers according to the invention may preferably be substantially free of long chain branching, whereby substantially free of long chain means with less than 1, further preferred with less than 0.5, further preferred with less than 0.3, further preferred less than 0.1, further preferred less than 0.03, further preferred less than 0.01 long chain branch(es) per 1000 carbon atoms, as determined for example by NMR.

A long chain branch as used in the present description means side chain with a length resembling the length of the main chain, that may mean that a long chain branch can have a length corresponding to > 15, preferably > 20, preferably >50, preferably > 100 carbon atoms in the backbone of the long chain branch. A long chain branch can thereby preferably for example be long enough for entanglement phenomena, preferably involving the branch, to occur.

Preferably, the density of the low density polyethylene (LDPE) ranges from 915 to 932, for example from 920 to 928 kg/m³. Preferably, the melt flow index as determined using ISO1133:2011 (190°C/2.16kg) ranges from 0.1 to 4 g/10min, for example from 0.3 to 3g/10min, for example from 0.2 to 2 g/10min, for example from 0.5 to 1.5 g/10min.

The LDPE applied in the present film may be produced by use of autoclave high pressure technology and by tubular reactor technology.

The density of the LDPE may be chosen for example in the range from 915 to 932 kg/m³.

Preferably, the density of the HDPE ranges from 940 to 965 kg/m³. Preferably, the melt flow index as determined using ISO1133:2011 (190°C/2.16kg) ranges from 0.1 to 4 g/10 min, for example from 0.3 to 3 g/10min, for example from 0.2 to 2 g/10min, for example from 0.5 to 1.5 g/10min.

With adjacent layer, as used herein, is meant a layer that is in direct contact with the layer to which it is described as adjacent. Each adjacent layer to an outer layer, would therefore be in direct contact with that outer layers. A layer adjacent to at least one outer layer is an intermediate layer.

In the multi-layer film according to the invention, both layers adjacent to the outer layers consist of high density polyethylene.

This may improve the hot tack and/or heat sealing properties and/or stiffness (as measured by the E-modulus, using ASTM D882-02). Also the tear strength as measured using ASTM D1922-09 may be varied. Furthermore, the use of HDPE in the multi-layer film according to the invention may provide a lower water vapour transition rate, or - in other words- will give increased water vapour barrier properties to the film, especially for example as compared to when at least one or both of the outer layers) adjacent to outer layer would be mainly LDPE or mainly LLDPE.

The thickness of a single-layer in a five layer multi-layer film of the invention may range for example from 5 to 50 µm, for example from 10 to 20 µm. Not all layers in the multi-layer film of the invention need to have the same thickness. For example, one or more layers in the multi-layer film may be thicker than the other layers, especially for example to increase the stability of the production process.

By using thin films, downgauging improvements may be obtained while maintaining the required performance regarding for example hot tack and heat sealing properties, puncture resistance, optical properties, for example gloss, modulus of elasticity, and/or processing characteristics

Each layer may also contain appropriate amounts of other additives such as for example fillers, antioxidants, pigments, stabilizers, antistatic agents and polymers depending on the specific use of the multi-layer film. Typically, additives may be present in a layer in an amount of 10 to 10000ppm, for example in an amount of 100 to 5000ppm based on the layer. Therefore, the invention also relates to a multi-layer film wherein one or more layers further comprise(s) one or more additives.

For example, each layer in the multi-layer film of the invention may comprise an amount of additives of 0 to 5 wt%, for example 0 to 2wt% based on the total weight of the layer, wherein the sum of the polymer(s) and the additives is 100wt% based on the total weight of the layer.

The multi-layer films of the present invention may be prepared by any method known in the art. Multi-layer structures may be prepared for example by a blown film co-extrusion process, for example as disclosed in "Film Extrusion Manual", (TAPPI PRESS, 2005, ISBN 1 -59510-075-X, Editor Butler, pages 413-435).

For example, in the process of coextrusion, the various resins may be first melted in separate extruders and then brought together in a feed block. The feed block is a series of flow channels which bring the layers together into a uniform stream. From this feed block, this multi-layer material then flows through an adapter and out a film die. The blown film die may be an annular die. The die diameter may be a few centimeters to more than three meters across. The molten plastic is pulled upwards from the die by a pair of nip rolls high above the die (from for example 4 meters to more than 20 meters). Changing the speed of these nip rollers will change the gauge (wall thickness) of the film. Around the die an air-ring may be provided. The air exiting the air-ring cools the film as it travels upwards. In the center of the die there may be an air outlet from which compressed air can be forced into the center of the extruded circular profile, creating a bubble. This expands the extruded circular cross section by some ratio (a multiple of the die diameter). This ratio, called the "blow-up ratio" can be just a few percent to for example more than 300 percent of the original diameter. The nip rolls flatten the bubble into a double layer of film whose width (called the "layflat") is equal to ½ of the circumference of the bubble. This film may then be spooled or printed on, cut into shapes, and heat sealed into bags or other items.

Heat sealing of the multi-layer film may for example be done by sealing equipment such as a compression packaging machine as for example disclosed in US3753331.

In another aspect, the invention relates to a process for the preparation of a film according to the invention, wherein the film is prepared by a blown film extrusion process.

In another aspect, the invention relates to an article comprising a film according to the invention.

For example, the article, may be a film that is heat sealed into a bag. Also, the article may be compressed product packaging, a flexible package or a collation shrink package.

In another aspect, the invention relates to the use of the film according to the invention for the preparation of an article, for example for the preparation of a packaging material., for example for a packaging material that is suitable for storing food and beverages.

Examples of food and beverages include but are not limited to coffee, pet food, meat fish, poultry, cheese or other dairy products, frozen foods or confectionary.

However, the articles of the invention may also be used for non-food (consumer) applications, for example the articles of the invention may be used as carrier bags. Accordingly, the films according to the invention may also be used for the preparation of a packaging material that is suitable for non-food (consumer) applications.

The film according to the invention may also be used for the preparation of flexible or rigid packaging.

Although the invention has been described in detail for purposes of illustration, it is understood that such detail is solely for that purpose and variations can be made therein by those skilled in the art.

It is further noted that the invention relates to all possible combinations of features described herein, preferred in particular are those combinations of features that are present in the claims.

It is further noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention is now further explained by way of the following examples.

### Examples

In total twenty 5-layer blown films were produced. The layer thickness of the films was either 50µm (10 µm per layer) or 100µm (20 µm per layer).

All 5-layer blown films were produced on a Reifenhauser 5-layer coextrusion blown film line, equipped with Ø 70/70/70/70/70mm extruders with 30D barrier screws to provide the layers of the film structure. The line was equipped with a Ø 325 mm die with IBC, a die gap of 1,4 mm, reversing haul-off, chilled cooling air, thickness profile measurement and back to back winder. The overall throughput of 300 kg/h and blow up ratio (BUR) of 3 were kept constant. Barrel temperature profiles were ramped from 40°C at the feed section to 200°C at the die.

The materials used and their melt flow index as determined using ISO1133:2011 (2.16kg/10min/190°C) and their density are indicated in Table 1 below.

**Table 1. Materials used in the 5-layer blown films.**

| Type | Grade | abbreviation | MFI [2.16kg/10min/190°C] | Density [kg/m3] |
|---|---|---|---|---|
| LDPE | Sabic® LDPE2501 TN00 | LD | 0.75 | 925 |
| C6-LLDPE | Sabic®LLDPE6118NE | LL | 0.9 | 918 |
| HDPE | Sabic® F04660 | HD | 0.7 | 961 |

Table 2 summarizes the layer of the films produced, with the film thickness indicated between brackets.

**Table 2.**

| Exp. # | Exp. # | Layer 1 | Layer 2 | Layer 3 | Layer 4 | Layer 5 |
|---|---|---|---|---|---|---|
| | | | | | | |
| 44 (100µm) | 45 (50µm) | LL | LL | LL | LL | LL |
| 26 (100µm) | 27 (50µm) | LL | LD | LL | LD | LL |
| 39 (100µm) | 38 (50µm) | LL | LD | HD | LD | LL |
| 52 (100µm) | 53 (50µm) | LL | HD | LD | HD | LL |
| 47 (100µm) | 46 (50µm) | LL | HD | LL | HD | LL |

Heat seal-strength of the films was determined according to ASTM F88-06, technique A. Hot-tack force of the films was determined according to ASTM F1921-12

Experiments 52 and 53 belong to the invention. Experiments 38, 39, 46 and 47 do not belong to the invention. Experiments #44, #45, #26 and #27 are comparative examples. One can thereby see that heat seal strength and/or hot-tack force is improved compared to the comparative examples over the comparative example.

### Short description of the figures

Figure 1 (Fig. 1) presents the heat seal-strength A (in N/24mm) of the 100µm films as a function of the seal bar temperature B (in °C).
Figure 2 (Fig. 2) presents the heat seal-strength A (in N/24mm) of the 50µm films as a function of the seal bar temperature B (in °C).
Figure 3 (Fig. 3) presents the hot tack force C (in N/15mm) of the 100µm films as a function of the seal bar temperature B (in °C).
Figure 4 (Fig. 4) presents the hot tack force C (in N/15mm) of the 50µm films as a function of the seal bar temperature B (in °C).
Figure 5 (Fig. 5) concerns comparative examples and presents the heat seal-strength A (in N/24mm) of the 100µm films as a function of the seal bar temperature B (in °C) for five layer film that consists of five layers of low density polyethylene (comparative example, Exp. #01) and for a five layer film that consists of two outer layers of low density polyethylene, a core layer of low density polyethylene and two layers intermediate layers of high density polyethylene (comparative example, Exp. #60) and Exp. #47.

### Results and discussion

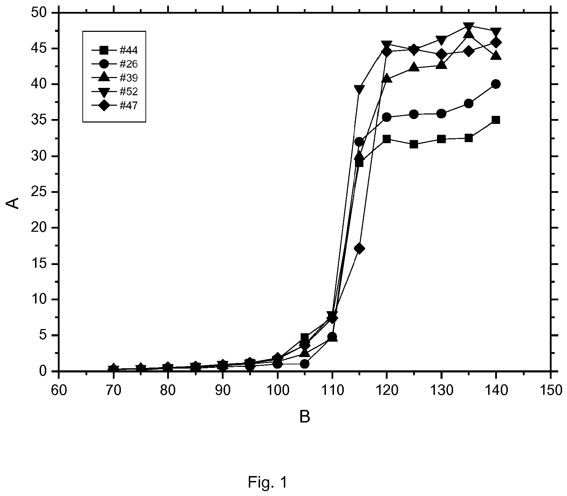

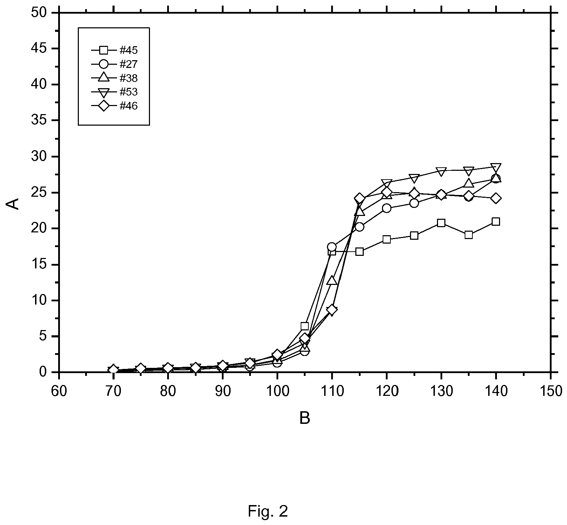

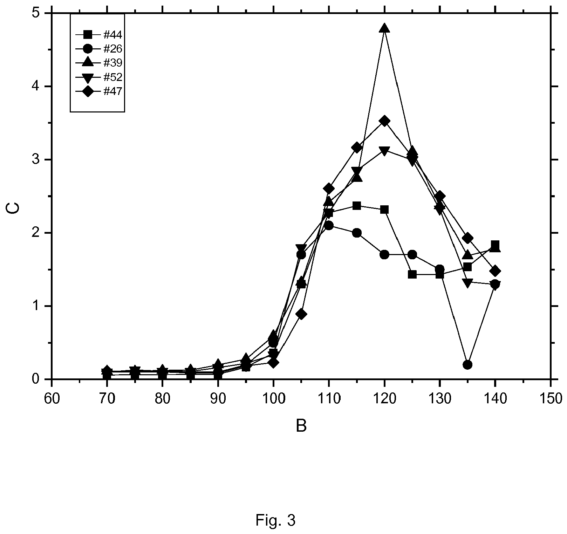

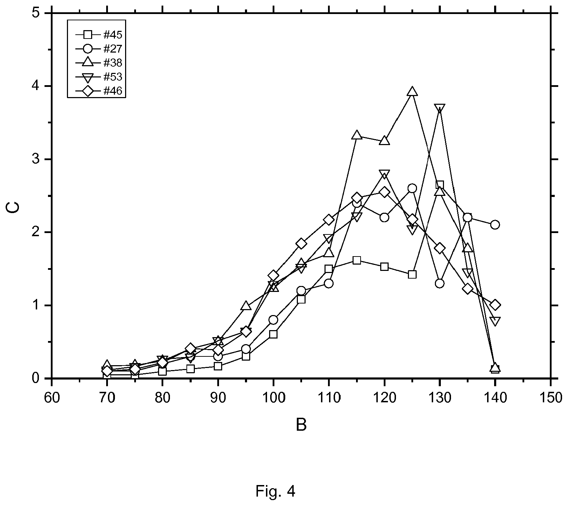

As can be seen from Figures 1-4, a 5 layer film consisting of
I. a first layer consisting of linear low density polyethylene,
II. a second layer consisting of low density polyethylene
III. a third layer consisting of linear low density polyethylene
IV. a fourth layer consisting of low density polyethylene
V. a fifth layer consisting of linear low density polyethylene has improved seal force and/or hot tack properties than a 5 layer film consisting of five layers consisting of LLDPE.

Improved seal force and/or hot tack properties are obtained by a 5 layer film consisting of
I. a first layer consisting of linear low density polyethylene,
II. a second layer consisting of low density polyethylene
III. a third layer consisting of high density polyethylene
IV. a fourth layer consisting of low density polyethylene
V. a fifth layer consisting of linear low density polyethylene

Further improved seal force and/or hot tack properties are obtained by a 5 layer film consisting of
I. a first layer consisting of linear low density polyethylene,
II. a second layer consisting of high density polyethylene
III. a third layer consisting of low density polyethylene
IV. a fourth layer consisting of high density polyethylene
V. a fifth layer consisting of linear low density polyethylene

Even further improved seal force and/or hot tack properties are obtained by a 5 layer film consisting of
I. a first layer consisting of linear low density polyethylene,
II. a second layer consisting of high density polyethylene
III. a third layer consisting of linear low density polyethylene
IV. a fourth layer consisting of high density polyethylene
V. a fifth layer consisting of linear low density polyethylene

In the examples above, the layers are laminated in the recited order. The layers I and V are thus be outer layers, the layers II and IV are the intermediate layers and the layer III is the core layer.

These experiments evidence that the multi-layer films of the invention have improved heat sealing and/or hot tack properties.

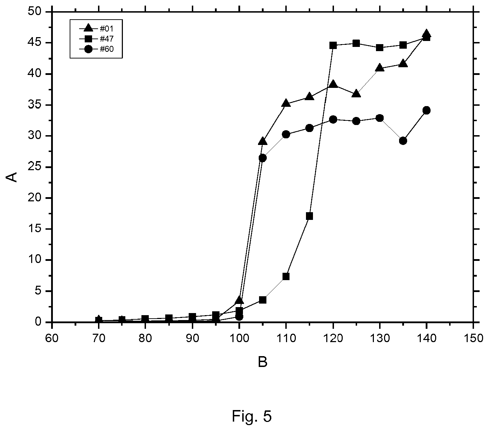

Figure 5 (Fig. 5) shows that for comparative examples the heat seal-strength, obtained at the same seal bat temperature, for a five layer film that consists of two outer layers of low density polyethylene, a core layer of low density polyethylene and two layers intermediate layers of high density polyethylene is lower compared to a five layer film that consists of five layers of low density polyethylene and (materials are again as indicated in Table 1 and the films according to the comparative examples were apart from their layer-structure produced as indicated above for the examples according to the invention to allow comparison). This shows that no improvement in heat seal-strength by using intermediate layers comprising high density polyethylene can be achieved when the outer layer(s) comprise or consist essentially of low density polyethylene.

In contrast, with multi-layer film of Exp. #47, as listed in Table 2 for example a higher heat seal-strength at lower seal bar temperature can surprisingly be achieved.

The mechanical and optical properties of the films tested herein were also tested. The mechanical and optical properties were measured using the ASTM norms as indicated below. The results are indicated in Table 3.

**Table 3.**

| Property/ Exp. # | Gloss ASTM D2457-97 | Modulus ASTMD882-02 (TD) | Modulus ASTM D882-02(MD) | Puncture resistance ASTM D5748-95 (energy/thickness) |
|---|---|---|---|---|
| 44 | 26 | 208 | 187 | 633 |
| 26 | 41 | 190 | 180 | 640 |
| 39 | 51 | 277 | 260 | 671 |
| 52 | 37 | 363 | 348 | 716 |
| 47 | 33 | 375 | 356 | 719 |
| | | | | |
| 45 | 28 | 212 | 183 | 792 |
| 27 | 47 | 193 | 176 | 796 |
| 38 | 61 | 289 | 258 | 862 |
| 53 | 51 | 384 | 352 | 896 |
| 46 | 53 | 372 | 342 | 808 |

| | | | | |
|---|---|---|---|---|
| TD transverse direction (perpendicular to the direction of the extrusion) MD machine direction (direction of the extrusion) | | | | |

As can be seen from Table 3, the multi-layer films of the invention have good or improved mechanical properties and/or a good or improved gloss, which makes them particularly suitable for example for producing packaging materials.

## Claims

1. A multilayer 5 layer film consisting of
I. a first layer consisting of linear low density polyethylene
II. and IV. a second layer and a fourth layer both consisting of high density polyethylene
III. a third layer consisting of low density polyethylene
V. a fifth layer consisting of linear low density polyethylene;
wherein layers I and V are the outer layers, layers II and IV are intermediate layers, and layer III is the core layer, and wherein both outer layers comprise linear low density polyethylene substantially free of long chain branching and having a density above 915 kg/m³.

2. Multi-layer film according to claim 1, wherein each single layer may have a thickness of from 5 to 50 µm, preferably 10 to 20 µm.

3. Article comprising a multi-layer film according to any one of claims 1-2.

4. Use of the multi-layer film according to any one of claims 1-2 for the preparation of an article, for example for the preparation of a packaging material, for example for a packaging material that is suitable for storing food and beverages.

5. Use according to claim 4 for the preparation of a packaging material.

6. Use of the multilayer film of claim 1 for the improvement of seal force and/or hot tack properties of packaging materials.

## Patentansprüche

1. Mehrschichtige 5 Schichtfolie, bestehend aus
I. einer ersten Schicht, die aus linearem Polyethylen mit niedriger Dichte besteht
II. und IV. einer zweiten Schicht und einer vierten Schicht, die beide aus Polyethylen mit hoher Dichte bestehen
III. einer dritten Schicht, die aus Polyethylen mit niedriger Dichte besteht
V. einer fünften Schicht, die aus linearem Polyethylen mit niedriger Dichte besteht;
wobei Schichten I und V die äußeren Schichten sind, Schichten II und IV die Zwischenschichten sind und Schicht III die Kernschicht ist, und wobei beide äußeren Schichten lineares Polyethylen mit niedriger Dichte umfassen, das im Wesentlichen frei von Langkettenverzweigung ist und eine Dichte von über 915 kg/m³ aufweist.

2. Mehrschichtige Folie nach Anspruch 1, wobei jede einzelne Schicht eine Dicke von 5 bis 50 µm, vorzugsweise von 10 bis 20 µm aufweisen kann.

3. Erzeugnis, umfassend eine mehrschichtige Folie nach einem der Ansprüche 1 bis 2.

4. Verwendung der mehrschichtigen Folie nach einem der Ansprüche 1 bis 2 für die Herstellung eines Erzeugnisses, beispielsweise für die Herstellung eines Verpackungsmaterials, beispielsweise für ein Verpackungsmaterial, das geeignet ist, Lebensmittel und Getränke zu lagern.

5. Verwendung nach Anspruch 4 für die Herstellung eines Verpackungsmaterials.

6. Verwendung der mehrschichtigen Folie nach Anspruch 1 für die Verbesserung einer Dichtleistung und/oder von Heißklebrigkeitseigenschaften von Verpackungsmaterialien.

## Revendications

1. Film multicouches à 5 couches constitué de
I. une première couche constituée de polyéthylène à faible densité linéaire
II. et IV. une deuxième couche et une quatrième couche, les deux constituées de polyéthylène à haute densité
III. une troisième couche constituée de polyéthylène à faible densité
V. une cinquième couche constituée de polyéthylène à faible densité linéaire ;
les couches I et V constituant les couches externes, les couches II et IV constituant les couches intermédiaires, et la couche III constituant la couche centrale, et les deux couches externes comprenant le polyéthylène à faible densité linéaire sensiblement exempt d'une ramification à longue chaîne et présentant une densité supérieure à 915 kg/m³.

2. Film multicouches selon la revendication 1, dans lequel chaque couche unique peut présenter une épaisseur allant de 5 à 50 µm, de préférence de 10 à 20 µm.

3. Article comprenant un film multicouches selon l'une quelconque des revendications 1 et 2.

4. Utilisation du film multicouches selon l'une quelconque des revendications 1 et 2 destinée à la préparation d'un article, par exemple destinée à la préparation d'un matériau d'emballage, par exemple destinée à un matériau d'emballage qui est adapté au stockage de nourriture et boissons.

5. Utilisation selon la revendication 4 destinée à la préparation d'un matériau d'emballage.

6. Utilisation du film multicouches selon la revendication 1 destinée à l'amélioration de de propriétés de force de scellement et/ou de soudure à chaud de matériaux d'emballage.
